# EUROPÄISCHE PATENTSCHRIFT

(11) **EP 2 882 588 B1**
(45) Veröffentlichungstag und Bekanntmachung des Hinweises auf die Patenterteilung: **11.12.2019**
(21) Anmeldenummer: 13732174.1
(22) Anmeldetag: 28.06.2013
(51) Int. Cl.: B32B 17/10, G02F 1/17

(54) **ELEKTRISCH SCHALTBARE VERBUNDSCHEIBENANORDNUNG**
ELECTRICALLY SWITCHABLE LAMINATED PANE ASSEMBLY
AGENCEMENT DE VITRAGE FEUILLLETÉ ÉLECTRIQUEMENT COMMUTABLE

(30) Priorität: 09.08.2012 EP 12179771
(43) Veröffentlichungstag der Anmeldung: 17.06.2015
(73) Patentinhaber: Saint-Gobain Glass France, 92400 Courbevoie (FR)
(72) Erfinder: VON DER WEIDEN, Ingo, 52074 Aachen (DE); SZNERSKI, Andreas, 52477 Alsdorf (DE); PENNERS, Franz, 52525 Heinsberg (DE); MENNIG, Julius, 52070 Aachen (DE)
(74) Vertreter: Gebauer, Dieter Edmund
(86) Internationale Anmeldenummer: PCT/EP2013/063628
(87) Internationale Veröffentlichungsnummer: WO 2014/023475

(56) Entgegenhaltungen:
- WO-A1-2009/153593
- WO-A1-2010/032068
- WO-A1-2012/154663
- DE-A1-102009 058 136
- US-A1- 2004 067 343
- US-A1- 2005 227 061
- US-A1- 2009 219 468
- US-A1- 2011 018 563
- US-A1- 2012 013 969
- KEMPE M D ET AL: "Evaluation and modeling of edge-seal materials for photovoltaic applications", 35TH IEEE PHOTOVOLTAIC SPECIALISTS CONFERENCE (PVSC), 20-25 JUNE 2010, HONOLULU, HI, USA, IEEE, PISCATAWAY, NJ, USA, 20. Juni 2010 (2010-06-20), Seiten 256-261, XP031784187, ISBN: 978-1-4244-5890-5

## Beschreibung

Die Erfindung betrifft eine elektrisch schaltbare Verbundscheibenanordnung, Verfahren zur Herstellung und ihre Verwendung als Fahrzeug- und Bauverglasung.

Verglasungen, die auf Knopfdruck ihre Lichtdurchlässigkeit ändern und somit zwischen einer dunklen und transparenten Ansicht wechseln können, sind in der Technik weit verbreitet. Insbesondere im Fahrzeugbau eröffnen sich viele Möglichkeiten. Im Hochsommer und bei starker Sonneneinstrahlung kann sich der Fahrgastraum durch die Fensteröffnungen sehr stark aufheizen. Zudem kann der Fahrer durch gestreutes Licht während der Fahrt geblendet werden. Insbesondere bei Dachverglasungen von Kraftfahrzeugen kann sich das Fahrzeug im Sommer schnell und stark aufheizen. Diese Aufheizung des Fahrzeuginnenraums wirkt sich nicht nur negativ auf die Konzentrations- und Reaktionsfähigkeit des Fahrers aus, sondern erhöht in einem nicht unwesentlichen Maße den Energie- und somit auch Treibstoffverbrauch des Kraftfahrzeuges.

Es existieren verschiedene Möglichkeiten zur Regulation der Lichtdurchlässigkeit einer Scheibe, beispielsweise in elektrochromen Verglasungen oder Flüssigkristallbildschirmen (LCD).

US 6,277,523 B1 beschreibt die Bau- und Funktionsweise einer elektrochromen Beschichtung. Dabei lässt sich die Transparenz für Licht verschiedener Wellenlängen durch Anlegen einer elektrischen Ladung steuern und regulieren.

Die JP 2008-025229 A1 offenbart ein System zur Veränderung der Lichtdurchlässigkeit in Doppelfassaden. Dies ermöglicht eine Regulierung der einfallenden Lichtmenge und damit der Wärmemenge im Gebäude. Die Steuerung der Transmission wird dabei durch Keimbildungsprozesse, d. h. Tröpfchenbildung eines Gases in der Zwischenschicht gesteuert.

US 2004257649 A1 offenbart eine mehrteilige Gebäudeverglasung mit elektrisch schaltbarem SPD-Film.

US 2005/0227061 A1 offenbart ein Verfahren zur Herstellung und Laminierung eines SPD-Films (suspended particle device). Der eigentliche SPD-Film wird dabei unter Hitzeeinwirkung und Vakuum zwischen Klebefolien laminiert.

EP 2 010 385 B1 offenbart eine Verbundverglasung mit einer mehrschichtigen Zwischenschicht. Die Zwischenschicht enthält mindestens drei Klebefolien, eine Schicht mit infrarotablenkender Funktion und eine elektrische Einrichtung. Diese umfasst eine Vorrichtung mit Flüssigkristallschicht oder SPD-Film. Die elektrische Einrichtung ist innerhalb einer Aussparung einer Klebefolie angeordnet.

EP 2 013 013 B1 offenbart eine Verbundverglasung mit einer mindestens dreilagigen Zwischenschicht. Eine mittlere Zwischenschicht bildet dabei den Rahmen für einen SPD-Film und wird zusammen mit einer unteren Zwischenschicht und einer oberen Zwischenschicht laminiert. Die Zwischenschichtmaterialien enthalten als wichtige Bedingung keinen Weichmacher.

Die nachveröffentlichte WO 2012/154663 A1 zeigt eine Verbundscheibenanordnung mit einem den Rand der SPD-Folie umgreifenden Polyimid-Dichtmaterial. Die Dokumente US 2012/013969 A1, US 2005/227061 A1, WO 2010/032068 A1 und WO 2009/153593 A1 zeigen jeweils eine Verbundscheibenanordnung mit einer SPD-Folie. Polyimid als Dichtmaterial kann den Dokumenten Kempe M. D. et al.: "Evaluation and modeling of edgeseal materials for photovoltaic applications", 35th IEEE Photovoltaic specialists conference (PVSC), 20-25 June 2010, Honolulu, HI, USA sowie US 2011/018563 A1 entnommen werden.

Ein häufiges Problem bei Verbundverglasungen ist die vorzeitige Alterung der Zwischenfolien. Eindringende Feuchtigkeit und Sauerstoff können besonders in Verbindung mit der UV-Strahlung des Sonnenlichts zu einer zumindest oberflächigen Degradation der Klebefolie führen. Die Qualität der Randversiegelung hat daher einen großen Einfluss auf die Güte und Langzeitstabilität der gesamten Verglasung. Sind noch zusätzlich anorganische Funktionsschichten, insbesondere metallische Funktionsschichten vorhanden, so erhöht sich die Alterung der Zwischenschichten noch deutlich.

Die Alterung kann sich dabei nicht nur auf den optischen Gesamteindruck der Verglasung auswirken, sondern auch die Funktionalität deutlich einschränken. Insbesondere im Bereich der Verglasungsaußenkanten kann die Funktionsweise der Verglasung deutlich eingeschränkt sein. Im Bereich der Verglasungen mit SPD-Filmen bedeutet dies, dass der Farbumschlag im Randbereich verzögert wird oder auch völlig unterbleiben kann. Insbesondere bei nicht angelegter Spannung erscheint die Verglasung im Randbereich zunehmend heller. Dieser Aufhellungseffekt kann sich im Laufe der Zeit über den gesamten Verglasungsbereich ausdehnen.

Die Aufgabe der Erfindung liegt darin, eine elektrisch schaltbare Verglasung mit SPD-Film bereitzustellen, welche eine hohe und lang anhaltende Alterungsstabilität der Funktionsschicht aufweist.

Die Aufgabe der vorliegenden Erfindung wird gemäß den unabhängigen Ansprüchen 1 und 2 gelöst. Bevorzugte Ausführungen gehen aus den Unteransprüchen hervor.

Zwei erfindungsgemäße Verfahren zur Herstellung einer elektrisch schaltbaren Verglasung mit SPD-Film und deren Verwendung gehen aus weiteren unabhängigen Ansprüchen hervor.

Die erfindungsgemäße schaltbare Verbundscheibenanordnung umfasst mindestens eine erste Scheibe, eine zweite Scheibe und eine dazwischen angeordnete Zwischenschicht. Die Scheibe enthält bevorzugt Flachglas, Floatglas, Quarzglas, Borosilikatglas, Kalk-Natron-Glas und/oder Gemische davon. Alternativ kann die Scheibe auch Polymere wie Polycarbonat oder Polymethylmethacrylat (Plexiglas) umfassen. Die Zwischenschicht enthält mindestens eine erste thermoplastische Polymerfolie und eine zweite thermoplastische Polymerfolie sowie eine dazwischen angeordnete elektrisch schaltbare transmissionsveränderliche SPD-Folie. SPD (suspended particle device) - Filme und -Folien enthalten kolloidale Partikel im bevorzugten Größenbereich von kleiner 1 µm. Die Partikel sind in einer Lösung oder bevorzugt einer Polymermatrix suspendiert. Ohne Anwesenheit eines elektrischen Feldes sind die kolloidalen Partikel zufällig im Medium angeordnet und orientiert. Einfallendes Licht wird in diesem Zustand absorbiert oder reflektiert, der SPD-Film erscheint dunkel und undurchsichtig. Bei Anlegung eines elektrischen Feldes werden die kolloidalen Partikel ausgerichtet. Ein eingestrahlter Lichtstrahl kann passieren und der SPD-Film erscheint transparent. Durch Variation der Spannung ist auch eine graduelle Änderung der Lichttransmission des SPD-Films möglich. Eine detaillierte Beschreibung von SPD-Filmen findet sich beispielsweise in der US 2005/0227061 A1, insbesondere in [0004] bis [0015], ein Verfahren zur Laminierung einer Scheibe mit SPD-Film in [0016]. Die thermoplastische Polymerfolie enthält bevorzugt PVB (Polyvinylbutyral) oder EVA (Poly-Ethylvinylacetat). Optional können auch Polybutylenterephthalat (PBT), Polycarbonat (PC), Polyethylenterephthalat (PET) und Polyethylennaphthalat (PEN), Polyvinylchlorid (PVC), Polyvinylfluorid (PVF), Polyvinylbutyral (PVB) ohne Weichmacher und/oder Copolymere davon, besonders bevorzugt Polyethylenterephthalat (PET) enthalten sein. Im äußeren Kantenbereich, bevorzugt dem gesamten äußeren Kantenbereich der elektrisch schaltbaren transmissionsveränderlichen SPD-Folie ist eine Randversiegelung angeordnet. Die Randversiegelung, bevorzugt als eine Isolierfolie, enthält ein Polyimid (PI) und/oder Polyisobutylen (PIB).

Unter einer SPD-Folie ist im Sinne der Erfindung eine Mehrschichtfolie zu verstehen, bei der der eigentliche aktive SPD-Film flächenmäßig zwischen zumindest einer ersten und zumindest einer zweiten Trägerfolie angeordnet ist. Der Vorteil von SPD-Folien liegt in einer einfachen Herstellung der schaltbaren Verbundscheibenanordnung. Die SPD-Folie kann vor der Herstellung der Scheibenanordnung in größerer Stückzahl bereitgestellt werden und bei der Herstellung einfach in den Verbund eingelegt werden, welcher dann mit herkömmlichen Verfahren zur Verbundscheibe laminiert wird.

Die Trägerfolien enthalten bevorzugt zumindest ein thermoplastisches Polymer, besonders bevorzugt Polyethylenterephthalat (PET). Die Dicke jeder Trägerfolie beträgt bevorzugt von 0,1 mm bis 1 mm, besonders bevorzugt von 0,1 mm bis 0,2 mm.

Die Randversiegelung reicht gemäß einer ersten alternativen Ausgestaltung der Erfindung von dem äußeren Kantenbereich der elektrisch schaltbaren transmissionsveränderlichen SPD-Folie mindestens 1 mm in Richtung der Innenfläche der SPD-Folie. Die Randversiegelung umfasst eine Polyimidfolie oder -film. Der Ausdruck "äußere Kantenbereich" meint im Sinne der Erfindung die Schnittkanten der horizontal flachen Folie. Die Abdeckung mit Hilfe der Randversiegelung vermindert die Alterung der Zwischenschicht deutlich und messbar. Die polyimidhaltige Zusammensetzung der Randversiegelung zeigt dabei überraschenderweise einen besseren Alterungsschutz als beispielsweise ein handelsübliches Klebeband ("Tesafilm®"). Hierbei weisen die die erste thermoplastische Polymerfolie und die zweite thermoplastische Polymerfolie einen mindestens 2 mm größeren äußeren Kantenabstand auf als die in ihrem äußeren Kantenbereich mit der Randversiegelung, enthaltend ein Polyimid (PI), ummantelte SPD-Folie (3b).

Die Randversiegelung ist gemäß einer zweiten alternativen Ausgestaltung der Erfindung als eine mindestens 1 mm tiefe Einkerbung im Bereich der Zwischenschicht ausgebildet. Die Einkerbung reicht mindestens bis zur SPD-Folie und ist mit Polyisobutylen (PIB) und/oder Polyurethan (PU) gefüllt. Diese Randversiegelung schützt die SPD-Folie wirksam gegen Alterung und verlängert die Lebensdauer der schaltbaren Scheibenanordnung.

Die thermoplastischen Polymerfolien enthalten bevorzugt PVB (Polyvinylbutyral) und/oder EVA (Polyethylvinylacetat). Eine Polymerfolie aus EVA zeigt überraschenderweise in Verbindung mit der erfindungsgemäßen Randversiegelung, welche Polyimide (PI) und/oder Polyisobutylene enthält, den höchsten Alterungsschutz. Dieser ist wohl auf eine sehr starke Verbindung der erfindungsgemäßen Randversiegelung und dem EVA (Polyethylvinylacetat) während der Laminierung der Verglasung zurückzuführen.

Die schaltbare Verbundscheibenanordnung umfasst bevorzugt eine dritte thermoplastische Polymerfolie zwischen der ersten Scheibe und der zweiten thermoplastischen Polymerfolie.

Diese dritte thermoplastische Polymerfolie kann zur Verbesserung der mechanischen Eigenschaften, beispielsweise der Bruchsicherheit beitragen. Alternativ kann die dritte thermoplastische Folie auch als Träger für weitere Funktionen, beispielsweise Sonnenschutz, dienen.

Die schaltbare Verbundscheibenanordnung umfasst bevorzugt eine IR(Infrarot)-strahlungsabweisende Beschichtung zwischen der dritten thermoplastischen Polymerfolie und der zweiten thermoplastischen Polymerfolie.

Die IR-strahlungsabweisende Beschichtung enthält bevorzugt Niob, Tantal, Molybdän, Zirkonium, Silber Gold, Aluminium, Nickel, Chrom, Kupfer und/oder Gemische oder Legierungen davon.

Die elektrisch schaltbare transmissionsveränderliche SPD-Folie weist bevorzugt einen um 1 mm bis 4 mm niedrigeren Kantenabstand (cut-out) als die erste thermoplastische Polymerfolie und die zweite thermoplastische Polymerfolie auf. Dies bewirkt, dass die die SPD-Folie umschließende erste thermoplastische Folie und die zweite thermoplastische Folie um 1 mm bis 4 mm über den äußeren Rand der SPD-Folie hinausgehen. Dieser Überstand der thermoplastischen Folien erhöht in Verbindung mit der erfindungsgemäßen Randversiegelung noch einmal deutlich die Alterungsbeständigkeit der SPD-Folien und der gesamten schaltbaren Verbundscheibenanordnung.

Die Randversiegelung enthält bevorzugt eine Ummantelung aus Polyurethan, welche die Alterungsbeständigkeit weiter erhöht.

Die elektrisch schaltbare transmissionsveränderliche SPD-Folie weist bevorzugt eine Dicke von 100 µm bis 500 µm, bevorzugt 150 µm bis 400 µm auf.

Die elektrisch schaltbare transmissionsveränderliche SPD-Folie umfasst bevorzugt eine elektrische Kontaktierung. Die elektrische Kontaktierung ist mit einer Spannungsquelle und einem Steuerelement verbunden, welche somit eine Änderung, bevorzugt auch graduelle Änderung, der Transmission der schaltbaren Verbundscheibenanordnung ermöglicht.

Die Randversiegelung weist bevorzugt einen Polyacrylkleber auf. In einer bevorzugten Ausführungsform ist die Randversiegelung als Isolierfolie ausgebildet, der Polyacrylkleber fixiert die Isolierfolie auf dem elektrisch schaltbaren SPD-Film.

Die Erfindung umfasst des Weiteren ein Verfahren zur Herstellung einer schaltbaren Verbundscheibenanordnung gemäß Patentanspruch 10. In einem ersten Schritt wird eine elektrisch schaltbare transmissionsveränderliche SPD-Folie in ihrem äußeren Kantenbereich mit einer Randversiegelung (4) enthaltend ein Polyimid (PI) ummantelt. Die Randversiegelung ist bevorzugt als Isolierfolie umfassend eine Polyimidfolie mit einem Polyacrylklebstoff ausgebildet. Die ummantelte elektrisch schaltbare transmissionsveränderliche SPD-Folie bildet eine Folie.

Im nächsten Schritt wird die Folie zwischen einer ersten thermoplastischen Polymerfolie und einer zweiten thermoplastischen Polymerfolie zu einer Zwischenschicht angeordnet. Die erste thermoplastische Polymerfolie und die zweite thermoplastische Polymerfolie werden so angeordnet, dass die thermoplastischen Polymerfolien einen mindestens 2 mm größeren äußeren Kantenabstand aufweisen als die elektrisch schaltbare transmissionsveränderliche SPD-Folie. Bevorzugt wird die elektrisch schaltbare transmissionsveränderliche SPD-Folie noch mit einer elektrischen Kontaktierung versehen.

Im anschließenden Schritt wird die Zwischenschicht zwischen einer ersten Scheibe und einer zweiten Scheibe laminiert. Die entstandene Verbundverglasung kann in weiteren Schritten noch mit einer elektrischen Steuervorrichtung versehen werden.

Die Erfindung umfasst des Weiteren ein alternatives Verfahren zur Herstellung einer schaltbaren Verbundscheibenanordnung gemäß Patentanspruch 11. Eine elektrisch schaltbare transmissions-veränderliche SPD-Folie wird zu einer Zwischenschicht zwischen einer ersten thermoplastischen Polymerfolie und einer zweiten thermoplastischen Polymerfolie angeordnet.

Die Zwischenschicht wird anschließend zwischen einer ersten Scheibe und einer zweiten Scheibe laminiert.

In einem nächsten Schritt wird in die Zwischenschicht eine 1 mm bis 5 mm tiefe Einkerbung im Bereich der elektrisch schaltbaren transmissionsveränderlichen SPD-Folie gefräst. Im folgenden Schritt wird die Einkerbung mit Polyisobutylen (PIB) und anschließend mit Polyurethan (PU) gefüllt.

Die Erfindung umfasst des Weiteren die Verwendung der erfindungsgemäßen schaltbaren Verbundscheibenanordnung als Fahrzeugverglasung, Schiffsverglasung, Bahnverglasung, Flugzeugverglasung und/oder Bauverglasung.

Im Folgenden wird die Erfindung anhand von einer Zeichnung näher erläutert. Die Zeichnung ist eine rein schematische Darstellung und nicht maßstabsgetreu. Sie schränkt die Erfindung in keiner Weise ein.

Es zeigen:
Figur 1 einen Querschnitt einer elektrisch schaltbaren Verbundscheibenanordnung nach dem Stand der Technik,
Figur 2 einen Querschnitt einer erfindungsgemäßen elektrisch schaltbaren Verbundscheibenanordnung,
Figur 3 einen Querschnitt einer bevorzugten erfindungsgemäßen elektrisch schaltbaren Verbundscheibenanordnung,
Figur 4 einen Querschnitt einer weiteren bevorzugten erfindungsgemäßen elektrisch schaltbaren Verbundscheibenanordnung,
Figur 5 ein Fließschema zur Herstellung der erfindungsgemäßen elektrisch schaltbaren Verbundscheibenanordnung und
Figur 6 ein Fließschema zur alternativen Herstellung der erfindungsgemäßen elektrisch schaltbaren Verbundscheibenanordnung.

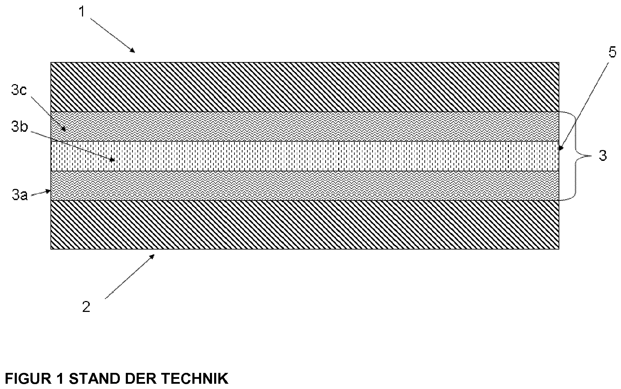

Figur 1 zeigt einen Querschnitt einer elektrisch schaltbaren Verbundscheibenanordnung nach dem Stand der Technik. Zwischen einer ersten Scheibe (1) und einer zweiten Scheibe (2) ist eine thermoplastische Zwischenschicht (3) angeordnet. Die thermoplastische Zwischenschicht (3) umfasst eine erste thermoplastische Polymerfolie (3a) und eine zweite thermoplastische Polymerfolie (3c) sowie eine dazwischen angeordnete elektrisch schaltbare transmissionsveränderliche SPD-Folie (3b). Über eine nicht gezeigte elektrische Kontaktierung ist eine Spannungsquelle an die elektrisch schaltbare transmissionsveränderliche SPD-Folie (3b) angeschlossen.

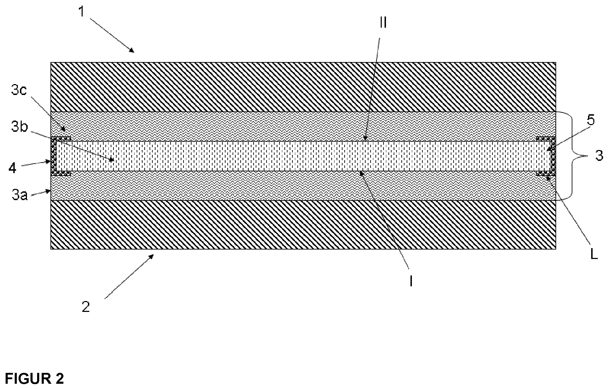

Figur 2 zeigt einen Querschnitt einer erfindungsgemäßen elektrisch schaltbaren Verbundscheibenanordnung. Zwischen einer ersten Scheibe (1) und einer zweiten Scheibe (2) ist eine thermoplastische Zwischenschicht (3) angeordnet. Die thermoplastische Zwischenschicht (3) umfasst eine erste thermoplastische Polymerfolie (3a) und eine zweite thermoplastische Polymerfolie (3c) sowie eine dazwischen angeordnete elektrisch schaltbare transmissionsveränderliche SPD-Folie (3b). Im äußeren Kantenbereich (5) der elektrisch schaltbaren transmissionsveränderlichen SPD-Folie (3b) ist eine Randversiegelung (4) angeordnet. Die Randversiegelung enthält ein Polyimid (PI) wobei die Randversiegelung (4) von dem äußeren Kantenbereich (5) mit der Länge (L) von mindestens 1 mm unterhalb (I) und oberhalb (II) der SPD-Folie (3b) zwischen die erste thermoplastische Polymerfolie (3a) und die zweite thermoplastische Polymerfolie (3c) reicht. Die Randversiegelung (4) ist als Polyimid-Folie ausgebildet.

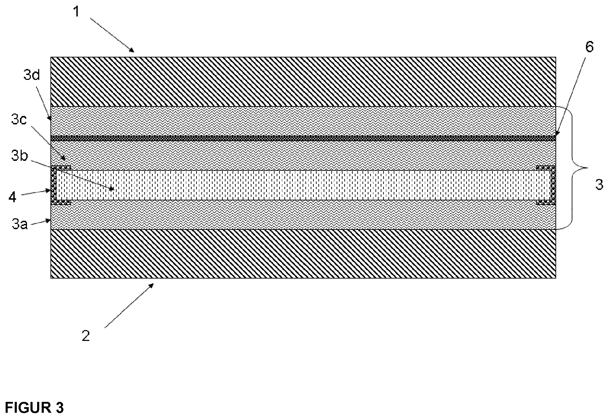

Figur 3 zeigt einen Querschnitt einer bevorzugten erfindungsgemäßen elektrisch schaltbaren Verbundscheibenanordnung. Der Grundaufbau entspricht dem in Figur 2 gezeigten. Zusätzlich ist eine dritte thermoplastische Polymerfolie (3d) zwischen der ersten Scheibe (1) und der Zwischenschicht (3) angeordnet. Weiterhin ist eine IR-strahlungsabweisende Beschichtung (6), beispielsweise Silber, zwischen der dritten thermoplastischen Polymerfolie (3d) und der Zwischenschicht (3) angeordnet.

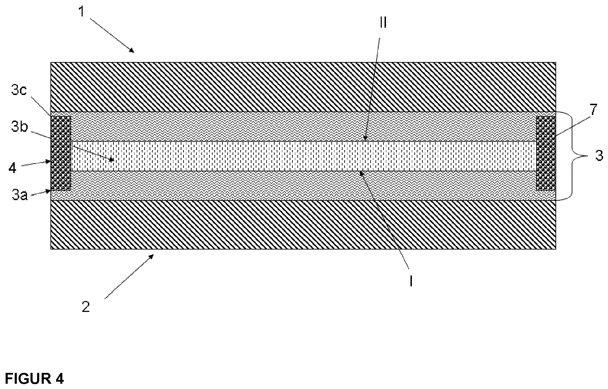

Figur 4 zeigt einen Querschnitt einer alternativen bevorzugten erfindungsgemäßen elektrisch schaltbaren Verbundscheibenanordnung. Der Grundaufbau entspricht bis auf die Randversiegelung (4) dem in Figur 2 gezeigten. Im Randbereich der Zwischenschicht (3) befindet sich eine Einkerbung (7) die mit einer Randversiegelung (4) aus Polyisobuthylen und Polyurethan gefüllt ist.

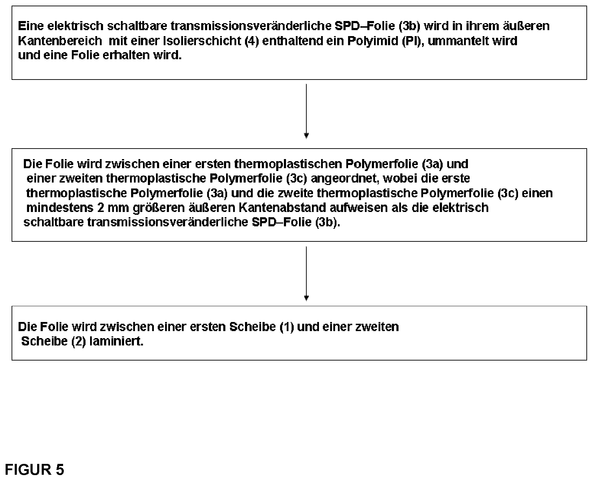

Figur 5 zeigt ein Fließschema zur Herstellung der erfindungsgemäßen elektrisch schaltbaren Verbundscheibenanordnung. In einem ersten Schritt wird eine elektrisch schaltbare transmissionsveränderliche SPD-Folie (3b) in ihrem äußeren Kantenbereich mit einer Randversiegelung (4) enthaltend ein Polyimid (PI) ummantelt. Die Randversiegelung (4) ist bevorzugt als Isolierfolie, umfassend eine Polyimidfolie mit einem Polyacrylklebstoff, ausgebildet. Die ummantelte elektrisch schaltbare transmissionsveränderliche SPD-Folie (3b) bildet eine Folie. Im nächsten Schritt wird die Folie so zwischen einer ersten thermoplastischen Polymerfolie und einer zweiten thermoplastischen Polymerfolie angeordnet, dass die thermoplastischen Polymerfolien (3a, 3c) einen mindestens 2 mm größeren äußeren Kantenabstand aufweisen als die Folie. In abschließenden, nicht gezeigten Schritten wird die elektrisch schaltbare transmissionsveränderliche SPD-Folie (3b) noch mit einer elektrischen Kontaktierung und einer elektrischen Steuerung versehen.

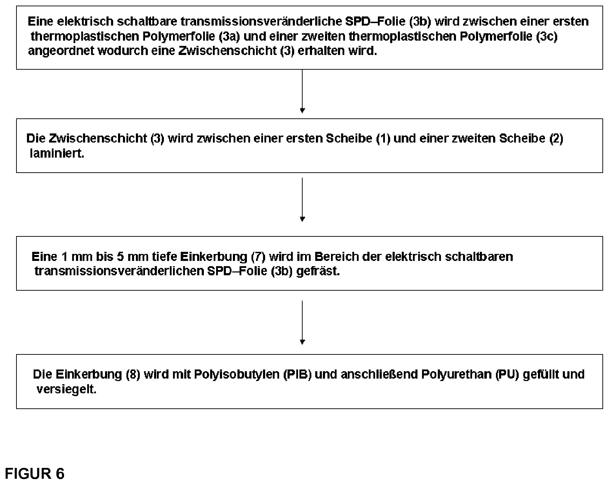

Figur 6 zeigt ein Fließschema zur alternativen Herstellung der erfindungsgemäßen elektrisch schaltbaren Verbundscheibenanordnung. Eine elektrisch schaltbare transmissions-veränderliche SPD-Folie (3b) wird zu einer Zwischenschicht (3) zwischen einer ersten thermoplastischen Polymerfolie (3a) und einer zweiten thermoplastischen Polymerfolie (3c) angeordnet. Die resultierende Zwischenschicht (3) wird anschließend zwischen einer ersten Scheibe (1) und einer zweiten Scheibe (2) laminiert. In einem nächsten Schritt wird eine mindestens 1 mm in die Zwischenschicht (3) im Bereich der elektrisch schaltbaren transmissionsveränderlichen SPD-Folie (3b) gefräst. Im folgenden Schritt wird die Einkerbung (7) mit Polyisobutylen (PIB) gefüllt. Nach Aushärtung des Polyisobutylen wird die Einkerbung (7) anschließend mit Polyurethan (PU) versiegelt.

Im Folgenden wird die Erfindung anhand von zwei Beispielen und eines Vergleichbeispiels näher erläutert. Die Beispiele schränken die Erfindung in keiner Weise ein.

### 1. Beispiel (erfindungsgemäß)

Eine Glasverbundscheibe (20 cm x 20 cm) enthielt folgenden Aufbau (mit Angaben der Dicke) aus erster Scheibe (1) (2,1 mm), erster thermoplastischer Polymerfolie (3a)(EVA, 0,38 mm), SPD-Folie (3b)(0,35 mm), zweiter thermoplastischer Polymerfolie (3c) (EVA, 0,38 mm), PET mit Silberbeschichtung (6)(0,05 mm), dritter thermoplastischer Polymerfolie (3c) (EVA, 0,38 mm), zweiter Scheibe (2) (2,1 mm). Die SPD-Folie (3b) war im Kantenbereich wie in Figur 2 und 3 gezeigt mit einer Randversiegelung (4) aus Polyimidfolie ummantelt. Die thermoplastischen Folien (3a, 3c) aus EVA wiesen gegenüber der SPD-Folie (3b) einen Überstand von etwa 2 mm auf. Die Glasverbundscheibe wurde einer Wärmelagerung für 28 Tage bei 90 °C und einem WOM (Wheatherometertest) für 1000 Stunden bei 90 °C und einer Bestrahlung über eine Xenon-Lampe (PV3929) mit einer Leistung von 1250 W/h*m² ausgesetzt.

### 2. Beispiel (erfindungsgemäß)

Eine Glasverbundscheibe (20 cm x 20 cm) enthielt folgenden Aufbau (mit Angaben der Dicke) aus erster Scheibe (1)(2,1 mm), erster thermoplastischer Polymerfolie (3a) (EVA, 0,38 mm), SPD-Folie (3b) (0,35 mm), zweiter thermoplastischer Polymerfolie (3c) (EVA, 0,38 mm), PET mit Silberbeschichtung (6) (0,05 mm), dritter thermoplastischer Polymerfolie (3c) (EVA, 0,38 mm), zweiter Scheibe (2) (2,1 mm). Die SPD-Folie (3b) war im Kantenbereich wie in Figur 4 gezeigt mit einer Randversiegelung (4) aus Polyisobutylen und Polyurethan ummantelt. Die Glasverbundscheibe wurde wie in Beispiel 1 einer Wärmelagerung für 28 Tage bei 90 °C und einem WOM (Wheatherometertest) für 1000 Stunden bei 90 °C und einer Bestrahlung über eine Xenon-Lampe (PV3929) mit einer Leistung von 1250 W/h*m² ausgesetzt.

### 3. Vergleichsbeispiel (Stand der Technik)

Die Glasverbundscheibe entsprach der in Beispiel 1 und 2 ohne Versiegelung der SPD-Folie (3b). Die Glasverbundscheibe wurde wie in Beispiel 1 und 2 einer Wärmelagerung für 28 Tage bei 90 °C und einem WOM-Test (Wheatherometertest) für 1000 Stunden bei 90 °C und einer Bestrahlung über eine Xenon-Lampe (PV3929) mit einer Leistung von 1250 W/h*m² ausgesetzt.

Die Ergebnisse der Untersuchungen der Beispiele finden sich in Tabelle 1. In den Beispielen wurde die Rückbildung der SPD-Folie im Kantenbereich nach den Testläufen "Wärmelagerung" und "WOM-Test" gemessen. Die Rückbildung der SPD-Folie zeigt sich durch Aufhellung der SPD-Folie im spannungslosen Zustand. Die Tabelle 1 gibt die Größe des Randbereichs der SPD-Folie in mm an, welcher im spannungslosen Zustand hell erscheint. Dieser Bereich ist somit nicht mehr (voll) funktionsfähig.

**Tabelle 1: Degradation der SPD-Folie im äußeren Randbereich**

| | Wärmelagerung | WOM-Test |
|---|---|---|
| Beispiel 1 | < 0,5 mm | < 1 mm |
| Beispiel 2 | < 1 mm | < 2mm |
| Vergleichsbeispiel 3 | > 5mm | > 5mm |

Die erfindungsgemäßen Beispiele 1 und Beispiel 2 zeigen sowohl bei der Wärmelagerung als auch beim WOM-Test eine nur sehr minimale und vernachlässigbare Schädigung des Randes der SPD-Folie. So bewegen sich die Abnahmen des funktionierenden Randbereichs je nach Testbedingungen zwischen 0,5 mm und 2mm. Im Vergleichsbeispiel 3 liegt die Schädigung des Randes (> 5 mm) der SPD-Folie um den Faktor 2,5 bis 10 höher als im erfindungsgemäßen Beispiel. Diese Ergebnisse waren überraschend und für den Fachmann nicht naheliegend. Eine Isolierung der SPD-Folie mit handelsüblichem Tesafilm® zeigt ähnliche Werte wie das Vergleichsbeispiel 3.

### Bezugszeichenliste

- (1): erste Scheibe
- (2): zweite Scheibe
- (3): Zwischenschicht
- (3a): erste thermoplastische Polymerfolie
- (3b): elektrisch schaltbare transmissionsveränderliche SPD -Folie
- (3c): eine zweite thermoplastische Polymerfolie
- (3d): dritte thermoplastische Polymerfolie
- (4): Randversiegelung
- (5): äußerer Kantenbereich
- (6): IR-strahlungsabweisende Beschichtung
- (7): Einkerbung
- (L): Länge der Randversiegelung entlang der SPD-Folie
- (I): Fläche unterhalb der SPD-Folie
- (II): Fläche oberhalb der SPD-Folie

## Patentansprüche

1. Schaltbare Verbundscheibenanordnung mindestens umfassend:
a. eine erste Scheibe (1),
b. eine zweite Scheibe (2) und
c. eine dazwischen angeordnete Zwischenschicht (3), wobei die Zwischenschicht (3) mindestens eine erste thermoplastische Polymerfolie (3a) und eine zweite thermoplastische Polymerfolie (3c) sowie eine dazwischen angeordnete SPD-Folie (3b) enthält und
d. eine im äußeren Kantenbereich (5) der Zwischenschicht (3) angeordnete Randversiegelung (4) enthaltend ein Polyimid (PI), wobei die Randversiegelung (4) die SPD-Folie (3b) im äußeren Kantenbereich (5) abdeckt und mit einer Länge (L) von mindestens 1 mm oberhalb und unterhalb der Innenflächen (I, II) der SPD-Folie (3b) verläuft, und wobei die Randversiegelung (4) eine Polyimidfolie umfasst, und wobei die erste thermoplastische Polymerfolie und die zweite thermoplastische Polymerfolie einen mindestens 2 mm größeren äußeren Kantenabstand aufweisen als die in ihrem äußeren Kantenbereich mit der Randversiegelung (4), enthaltend ein Polyimid (PI), ummantelte SPD-Folie (3b).

2. Schaltbare Verbundscheibenanordnung mindestens umfassend:
a. eine erste Scheibe (1),
b. eine zweite Scheibe (2) und
c. eine dazwischen angeordnete Zwischenschicht (3), wobei die Zwischenschicht (3) mindestens eine erste thermoplastische Polymerfolie (3a) und eine zweite thermoplastische Polymerfolie (3c) sowie eine dazwischen angeordnete SPD-Folie (3b) enthält und
d. eine im äußeren Kantenbereich (5) der Zwischenschicht (3) angeordnete Randversiegelung (4), enthaltend Polyisobutylen (PIB), wobei die Randversiegelung (4) ausgebildet ist als eine mindestens 1 mm tiefe Einkerbung (7) im Bereich der Zwischenschicht (3), die mit Polyisobutylen (PIB) und gegebenenfalls Polyurethan (PU) gefüllt ist, wobei die Einkerbung (7) mindestens bis zur SPD-Folie (7b) reicht.

3. Schaltbare Verbundscheibenanordnung nach einem der Ansprüche 1 oder 2, wobei eine dritte thermoplastische Polymerfolie (3d) zwischen der ersten Scheibe (1) und der zweiten thermoplastischen Polymerfolie (3c) angeordnet ist.

4. Schaltbare Verbundscheibenanordnung nach Anspruch 3, wobei eine IR-strahlungsabweisende Beschichtung (6) zwischen der dritten thermoplastischen Polymerfolie (3d) und der zweiten thermoplastischen Polymerfolie (3c) angeordnet ist.

5. Schaltbare Verbundscheibenanordnung nach Anspruch 4, wobei die IR-strahlungsabweisende Beschichtung (6) Niob, Tantal, Molybdän, Zirkonium, Silber Gold, Aluminium, Nickel, Chrom, Kupfer und/oder Gemische oder Legierungen davon enthält.

6. Schaltbare Verbundscheibenanordnung nach einem der Ansprüche 1 bis 5, wobei die thermoplastischen Polymerfolien (3a, 3c, 3d) PVB (Polyvinylbutyral) und/oder EVA (Polyethylvinylacetat), besonders bevorzugt EVA (Polyethylvinylacetat) enthalten.

7. Schaltbare Verbundscheibenanordnung nach einem der Ansprüche 1 bis 6, wobei die SPD-Folie (3b) eine Dicke von 100 µm bis 500 µm, bevorzugt 150 µm bis 400 µm aufweist.

8. Schaltbare Verbundscheibenanordnung nach einem der Ansprüche 1 bis 7, wobei die SPD-Folie (3b) eine elektrische Kontaktierung umfasst.

9. Schaltbare Verbundscheibenanordnung nach einem der Ansprüche 1 bis 8, wobei die Randversiegelung (4) einen Polyacrylkleber umfasst.

10. Verfahren zur Herstellung einer schaltbaren Verbundscheibenanordnung nach einem der Ansprüche 1 sowie 3 bis 9, wobei
a. eine SPD-Folie (3b) in ihrem äußeren Kantenbereich mit einer Randversiegelung (4), enthaltend ein Polyimid (PI), ummantelt wird wobei eine Folie erhalten wird, wobei die Randversiegelung (4) als Isolierfolie, umfassend eine Polyimidfolie mit einem Polyacrylatklebstoff, ausgebildet ist,
b. die Folie zwischen einer ersten thermoplastischen Polymerfolie (3a) und einer zweiten thermoplastischen Polymerfolie (3c) zu einer Zwischenschicht (3) angeordnet wird, wobei die erste thermoplastische Polymerfolie (3a) und die zweite thermoplastische Polymerfolie (3c) einen mindestens 2 mm größeren äußeren Kantenabstand aufweisen als die Folie und
c. die Zwischenschicht (3) und die Folie zwischen einer ersten Scheibe (1) und einer zweiten Scheibe (2) laminiert werden.

11. Verfahren zur Herstellung einer schaltbaren Verbundscheibenanordnung nach Anspruch 2 sowie 3 bis 9, wobei
a. eine SPD-Folie (3b) zwischen einer ersten thermoplastischen Polymerfolie (3a) und einer zweiten thermoplastischen Polymerfolie (3c) angeordnet wird und eine Zwischenschicht (3) erhalten wird,
b. die Zwischenschicht (3) zwischen einer ersten Scheibe (1) und einer zweiten Scheibe laminiert wird,
c. eine mindestens 1 mm tiefe Einkerbung (7) im Bereich der SPD-Folie (3b) gefräst oder gekratzt wird, wobei die Einkerbung mindestens bis zur SPD-Folie (7b) reicht.
d. die Einkerbung mit Polyisobutylen (PIB) und anschließend Polyurethan (PU) gefüllt wird.

12. Verwendung einer schaltbaren Verbundscheibenanordnung nach einem der Ansprüche 1 bis 9 als Fahrzeugverglasung, Schiffsverglasung, Bahnverglasung, Flugzeugverglasung und/oder Bauverglasung.

## Claims

1. Switchable composite pane arrangement comprising at least:
a. a first pane (1),
b. a second pane (2), and
c. an intermediate layer (3) arranged therebetween, wherein the intermediate layer (3) contains at least one first thermoplastic polymer film (3a) and one second thermoplastic polymer film (3c) as well as one SPD film (3b) arranged therebetween, and
d. an edge sealing (4) arranged in the outer edge region (5) of the intermediate layer (3), containing a polyimide (PI), wherein the edge sealing (4) covers the SPD film (3b) in the outer edge region (5) and runs with a length (L) of at least 1 mm above and below the inner surfaces (I, II) of the SPD film (3b), and wherein the edge sealing (4) comprises a polyimide film, and wherein the first thermoplastic polymer film and the second thermoplastic polymer film have an outer edge protrusion at least 2 mm greater than the SPD film (3b) covered in the outer edge region (5) by the edge sealing (4) comprising a polyimide.

2. Switchable composite pane arrangement comprising at least:
a. a first pane (1),
b. a second pane (2), and
c. an intermediate layer (3) arranged therebetween, wherein the intermediate layer (3) contains at least one first thermoplastic polymer film (3a) and one second thermoplastic polymer film (3c) as well as one SPD film (3b) arranged therebetween, and
d. an edge sealing (4) arranged in the outer edge region (5) of the intermediate layer (3), containing polyisobutylene (PIB), wherein the edge sealing (4) is configured as an at least 1-mm-deep notch (7) in the region of the intermediate layer (3) is filled with polyisobutylene (PIB) and optionally polyurethane (PU), wherein the notch (7) extends at least to the SPD film (3b).

3. Switchable composite pane arrangement according to one of claims 1 or 2, wherein a third thermoplastic polymer film (3d) is arranged between the first pane (1) and the second thermoplastic polymer film (3c).

4. Switchable composite pane arrangement according to claim 3, wherein an IRradiation-reflective coating (6) is arranged between the third thermoplastic polymer film (3d) and the second thermoplastic polymer film (3c).

5. Switchable composite pane arrangement according to claim 4, wherein the IRradiation-reflective coating (6) contains niobium, tantalum, molybdenum, zirconium, silver, gold, aluminum, nickel, chromium, copper, and/or mixtures or alloys thereof.

6. Switchable composite pane arrangement according to one of claims 1 through 5, wherein the thermoplastic polymer films (3a, 3c, 3d) contain PVB (polyvinyl butyral) and/or EVA (polyethyl vinyl acetate), particularly preferably EVA (polyethyl vinyl acetate).

7. Switchable composite pane arrangement according to one of claims 1 through 6, wherein the SPD film (3b) has a thickness from 100 µm to 500 µm, preferably 150 µm to 400 µm.

8. Switchable composite pane arrangement according to one of claims 1 through 7, wherein the SPD film (3b) comprises an electrical contact.

9. Switchable composite pane arrangement according to one of claims 1 through 8, wherein the edge sealing (4) includes a polyacrylic adhesive.

10. Method for producing a switchable composite pane arrangement according to one of claims 1 and 3 through 9, wherein
a. an SPD film (3b) is sheathed in its outer edge region by an edge sealing (4), containing a polyimide (PI), wherein a film is obtained, wherein the edge sealing (4) is implemented as an insulating film including a polyimide film with a polyacrylic adhesive,
b. the film is arranged between a first thermoplastic polymer film (3a) and a second thermoplastic polymer film (3c) to form an intermediate layer (3), wherein the first thermoplastic polymer film (3a) and the second thermoplastic polymer film (3c) have an outer edge protrusion greater by at least 2 mm than the film (7), and
c. the intermediate layer (3) and film are laminated between a first pane (1) and a second pane (2).

11. Method for producing a switchable composite pane arrangement according to claim 2 and 3 through 9, wherein
a. an SPD film (3b) is arranged between a first thermoplastic polymer film (3a) and a second thermoplastic (3c) and an intermediate layer (3) is obtained,
b. the intermediate layer (3) is laminated between a first pane (1) and a second pane,
c. a notch (7) at least 1 mm deep is milled or scratched in the region of the SPD film (3b),
d. the notch is filled with polyisobutylene (PIB) and then polyurethane (PU), wherein the notch (7) extends at least to the SPD film (3b).

12. Use of a switchable composite pane arrangement according to one of claims 1 through 9 as motor vehicle glazing, ship glazing, train glazing, aircraft glazing, and/or architectural glazing.

## Revendications

1. Arrangement de vitrage composite commutable comprenant au moins :
a. une première vitre (1),
b. une deuxième vitre (2) et
c. une couche intermédiaire (3) disposée entre les deux vitres, où la couche intermédiaire (3) contient au moins un premier film polymère thermoplastique (3a) et un deuxième film polymère thermoplastique (3c) ainsi qu'un film SPD (3b) disposé entre ceux-ci et
d. un scellement du bord (4) contenant un polyimide (PI) situé dans la zone du bord extérieur (5) de la couche intermédiaire (3), où le scellement du bord (4) couvre le film SPD (3b) dans la zone du bord extérieur (5) et s'étend au-dessus et au-dessous des surfaces (I, II) du film SPD (3b) avec une longueur (L) d'au moins 1 mm, et où le scellement du bord (4) comprend un film polyimide, et le premier film polymère thermoplastique et le deuxième film polymère thermoplastique présentent un espacement extérieur du bord au moins 2 mm supérieur par rapport au film SPD (3b) enveloppé dans sa zone de bord extérieur par le scellement du bord (4), contenant un polyimide (PI).

2. Arrangement de vitrage composite commutable comprenant au moins :
a. une première vitre (1),
b. une deuxième vitre (2) et
c. une couche intermédiaire (3) disposée entre les deux vitres, où la couche intermédiaire (3) contient au moins un premier film polymère thermoplastique (3a) et un deuxième film polymère thermoplastique (3c) ainsi qu'un film SPD (3b) disposé entre ceux-ci et
d. un scellement du bord (4) contenant du polyisobutylène (PIB) situé dans la zone du bord extérieur (5) de la couche intermédiaire (3), où le scellement du bord (4) est formé comme une encoche d'au moins 1 mm de profondeur (7) dans la zone de la couche intermédiaire (3) et est rempli de polyisobutylène (PIB) et éventuellement du polyuréthane (PU), où l'encoche (7) atteint au moins le film SPD (7b).

3. Arrangement de vitrage composite commutable selon l'une des revendications 1 ou 2, où un troisième film polymère thermoplastique (3d) est disposé entre la première vitre (1) et le deuxième film polymère thermoplastique (3c).

4. Arrangement de vitrage composite commutable selon la revendication 3, où un revêtement déflecteur de rayonnements IR (6) est disposé entre le troisième film polymère thermoplastique (3d) et le deuxième film polymère thermoplastique (3c).

5. Arrangement de vitrage composite commutable selon la revendication 4, où le revêtement déflecteur de rayonnements IR (6) contient du niobium, du tantale, du molybdène, du zirconium, de l'or, de l'argent, de l'aluminium, du nickel, du chrome, du cuivre et/ou des mélanges ou alliages de ceux-ci.

6. Arrangement de vitrage composite commutable selon l'une des revendications 1 à 5, ou les films polymères thermoplastiques (3a, 3c, 3d) contiennent du PVB (polyvinyle de butyral) et/ou de l'EVA (poly(éthylène-acétate de vinyle)), de manière particulièrement préférée de l'EVA (poly(éthylène-acétate de vinyle)).

7. Arrangement de vitrage composite commutable selon l'une des revendications 1 à 6, où le film SPD (3b) présente une épaisseur de 100 µm à 500 µm, de préférence de 150 µm à 400 µm.

8. Arrangement de vitrage composite commutable selon l'une des revendications 1 à 7, où le film SPD (3b) comprend une connexion électrique.

9. Arrangement de vitrage composite commutable selon l'une des revendications 1 à 8, où le scellement de bord (4) comprend un adhésif polyacrylique.

10. Méthode pour la production d'un arrangement de vitrage composite commutable selon l'une des revendications 1 et 3 à 9, où
a. un film SPD (3b) est enveloppé dans la zone de son bord extérieur par un scellement de bord (4), contenant un polyimide (PI), où un film est obtenu,
où le scellement de bord (4) est formé comme film isolant, comprenant un film polyimide avec un adhésif polyacrylique
b. le film est disposé entre un premier film polymère thermoplastique (3a) et un deuxième film polymère thermoplastique (3c) pour former une couche intermédiaire (3), où le premier film polymère thermoplastique (3a) et le deuxième film polymère thermoplastique (3a) et le deuxième film thermoplastique polymère (3c) présentent un espacement extérieur du bord au moins 2 mm supérieur par rapport au film,
c. la couche intermédiaire (3) et le film sont laminés entre une première vitre (1) et une deuxième vitre (2).

11. Méthode pour la production d'un arrangement de vitrage composite commutable selon la revendication 2 et les revendications 3 à 9, où
a. un film SPD (3b) est disposé entre un premier film polymère thermoplastique (3a) et un deuxième film polymère thermoplastique (3c) et une couche intermédiaire (3) est obtenu,
b. la couche intermédiaire (3) est laminée entre une première vitre (1) et une deuxième vitre,
c. une encoche (7) d'un minimum de 1 mm de profondeur est fraisée ou rayée dans la zone du film SPD (3b), où l'encoche s'étend au moins jusqu'au film SPD (7b),
d. l'encoche est remplie de polyisobutylène (PIB) et de polyuréthane (PU).

12. Utilisation d'un arrangement de vitrage composite commutable selon l'une des revendications 1 à 9 comme vitrage de véhicules, vitrage de navires, vitrage de trains, vitrage d'avions et/ou vitrage de construction.
